# EUROPEAN PATENT APPLICATION

(11) **EP 3 406 989 A1**
(43) Date of publication of application: **28.11.2018**
(21) Application number: 17173162.3
(22) Date of filing: 26.05.2017
(51) Int. Cl.: F24J 2/14, F24J 2/52, F24J 2/54

(54) **PLATFORM FOR PARABOLIC SOLAR COLLECTORS**

(71) Applicant: Lucida Solar Ltd., Jersey JE2 3TP (GB)
(72) Inventor: Sami Bin Abdelrahman, Albakri, jeddah (SA); Bilgin, ener, zmir (TR)
(74) Representative: Inal, Aysegul Seda

(57) **Abstract**

This invention is related to a carrier platform that is developed for installation and positioning of parabolic solar collectors used in solar thermal systems and that can move in two axes to enable perpendicularly tracking the sun all day long.

## Description

### Technical Field of the Invention

This invention is related to a carrier platform that is developed for installation and positioning of parabolic solar collectors used in solar thermal systems and that can move in two axes to enable perpendicularly tracking the sun all day long.

### Background of the Invention (Prior Art)

The solar energy systems that produce energy by using sunbeams are basically divided into photovoltaic systems which produce electric directly from the sun and solar thermal systems. Photovoltaic systems use solar cells that can directly produce electrical energy by using the photons inside the beams received from the sun. Solar thermal systems convert solar energy to thermal energy by focusing sunbeams to a heat transfer fluid.

In the known state of the art, different energy collecting methods and devices used in solar thermal systems change the temperature levels desired to be obtained. If the targeted temperature is up to 120 °C, use of stationary heating systems that do not track the sun is sufficient. To obtain temperatures above 120 °C, it is required to concentrate the sunbeams by focusing. In the known state of the art, systems known as concentrated solar power (CSP) can use solar power at maximum efficiency by reflecting all sun beams received on a certain area to single focal point by the help of reflective surfaces.

In the parabolic groove type concentrated solar power systems used in the known state of the art, there is a parabolic reflector and a collector pipeline positioned at the focal point of the parabola and positioned along the longitudinal axis of the groove. The parabolic grooves are aligned in the north-south direction and track the sun at a single axis along east-west direction. However, since the path of which the sun follows at the sky is inclined towards south at the north hemisphere and towards north at the south hemisphere, the single-axis-tracking collectors cannot use all of their usable surface area efficiently as they cannot always receive sunbeams perpendicularly.

Since said incidence angle of the sun constantly changes during the day and year, manual position adjustments are not an applicable method. Half of the surface area is lost at horizontal angles due to said incidence angle and therefore the system efficiency cannot go beyond 50%.

In addition to said losses, elements such as screens, lids or partitions that can be used to increase structural integrity of the module cannot be used in regions where the collector modules start and end. Because, since the collector does not track the sun always perpendicularly, if such elements are used a large shadow region forms on the collector surface. Therefore, in order to shape collector surfaces into precise parabolic forms, supporting components must be used especially behind the surfaces. This creates an additional cost.

The most important problem of the solar thermal systems of the known state of the art that track the sun in a single axis along east-west direction is that it is not possible to benefit from all the sun beams and total surface area of the system due to tracking the sun in a single axis, as described above in detail.

In order to solve this technical problem, a system that can constantly and dynamically track the sun in two axes both along the north-south and east-west directions and thus that can constantly make use of all sunbeams by using the total surface area must be developed.

### Brief Description and Objects of the Invention

By means of the platform of the invention, a concentrated thermal solar power system with parabolic grooves is made to track the sun in two axes along north-south and east-west directions.

On the platform of the invention, there are collector lines according to known state of the art that have the ability of moving in a single axis and these track the altitude angle of the sun by their rotational motion along a single axis. However, since all the collector lines are installed on the movable platform of the invention and since the platform can rotate about its own axis to track the sun along a second axis, the collector lines gain the capability of tracking the sun in two axes along with their own movements.

By means of motion in two axes obtained by the invention, all the collectors can constantly and perpendicularly track the sun all day long and all year long and they can use all of the collector aperture area.

Thus, the negative effect of the incidence angle of the sun on the system performance is eliminated.

During development of the platform of the invention, it is aimed to;
- Obtain a platform that can constantly track the sun in two axes,
- Enable constantly using all surface area of the collectors at 100% efficiency,
- Enable using parts that improve structural integrity such as screens, lids or partitions at collector joints,
- Enable covering collector modules with a glass panel in order to prevent thermal losses, increase structural integrity and decrease operational/maintenance costs,
- Obtaining a constant and stable structure having high endurance against atmospheric conditions since the collector modules are mounted to the ground by a single platform,
- Enable setting up thermal systems with desired dimensions by gathering a plurality of collectors in different sizes and numbers together as desired due to modularity advantage provided by the platform,
- Enable use of a single welded pipeline without requiring a flexible connection along the collectors for the heat transfer fluid.

### Brief Description of the Figures

The figures used for better describing the platform developed by the invention and descriptions of said figures are provided below.

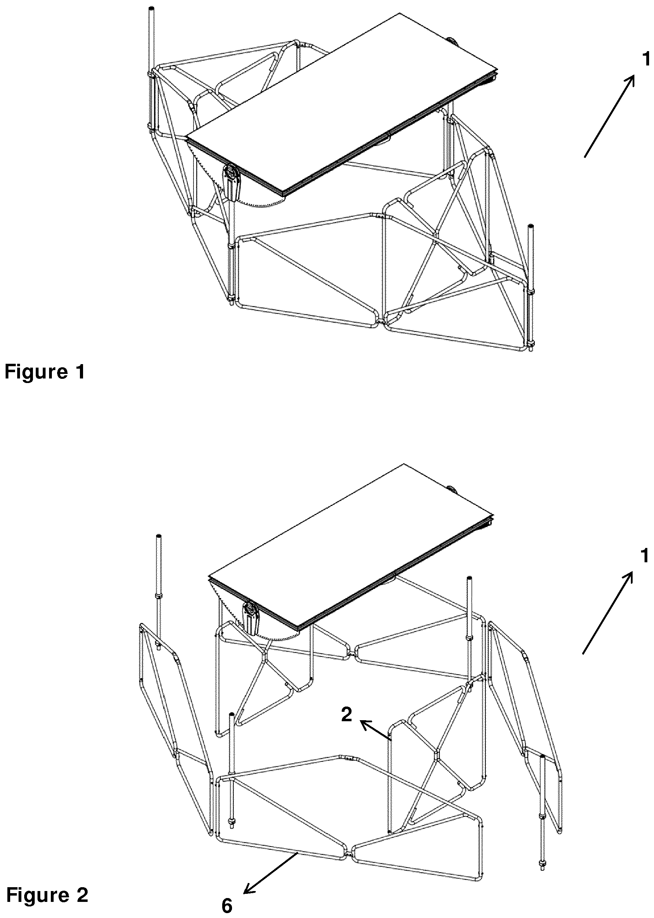

- **Figure 1**:: Perspective view of the platform along with the collector.
- **Figure 2:**: Exploded view of the platform along with the collector.

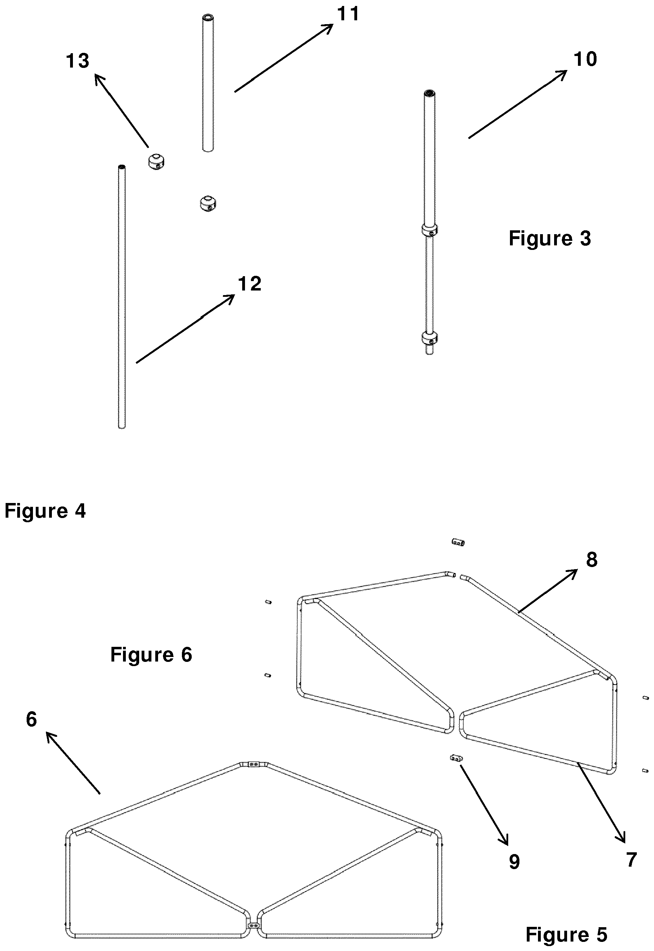

- **Figure 3:**: General view of the supporting poles.
- **Figure 4:**: Exploded view of the supporting poles.
- **Figure 5:**: General view of the polygonal leg.
- **Figure 6:**: Exploded view of the polygonal leg.

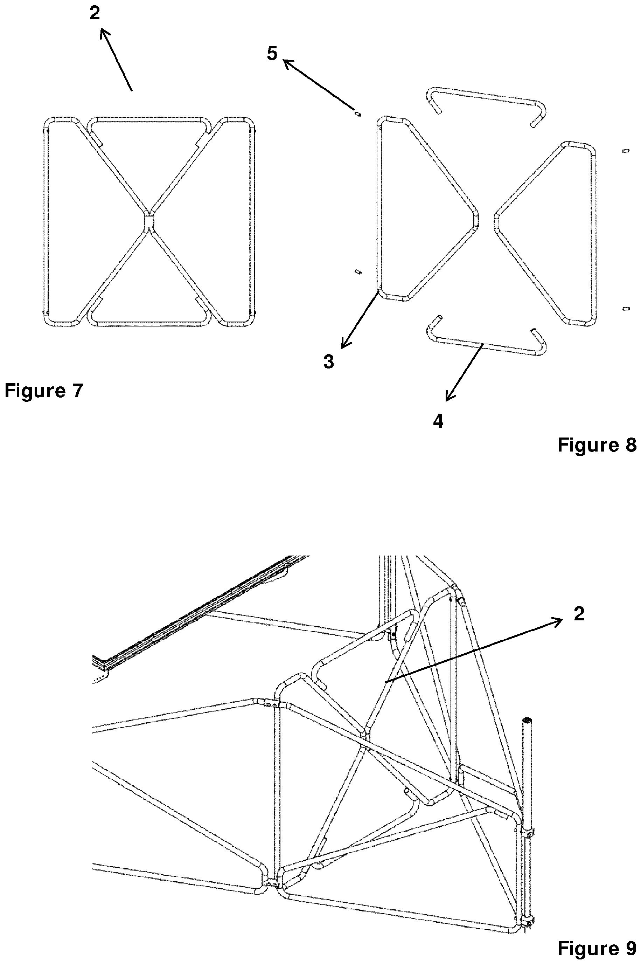

- **Figure 7:**: General view of the square leg.
- **Figure 8:**: Exploded view of the square leg.
- **Figure 9:**: Assembled view of the supporting post with the square and polygonal legs.

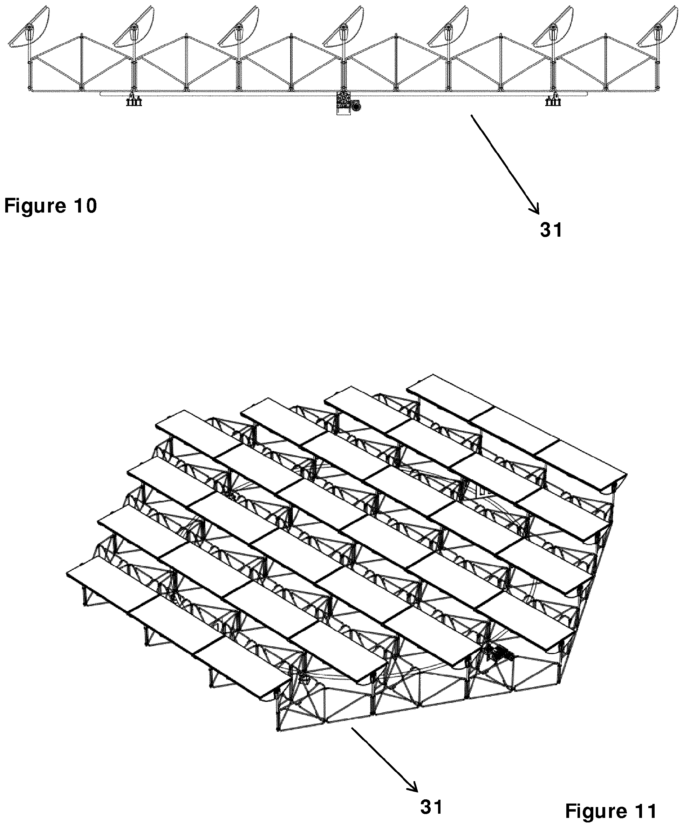

- **Figure 10:**: Side view of the platform in multiple collector configurations.
- **Figure 11:**: Perspective view of the platform in multiple collector configurations.

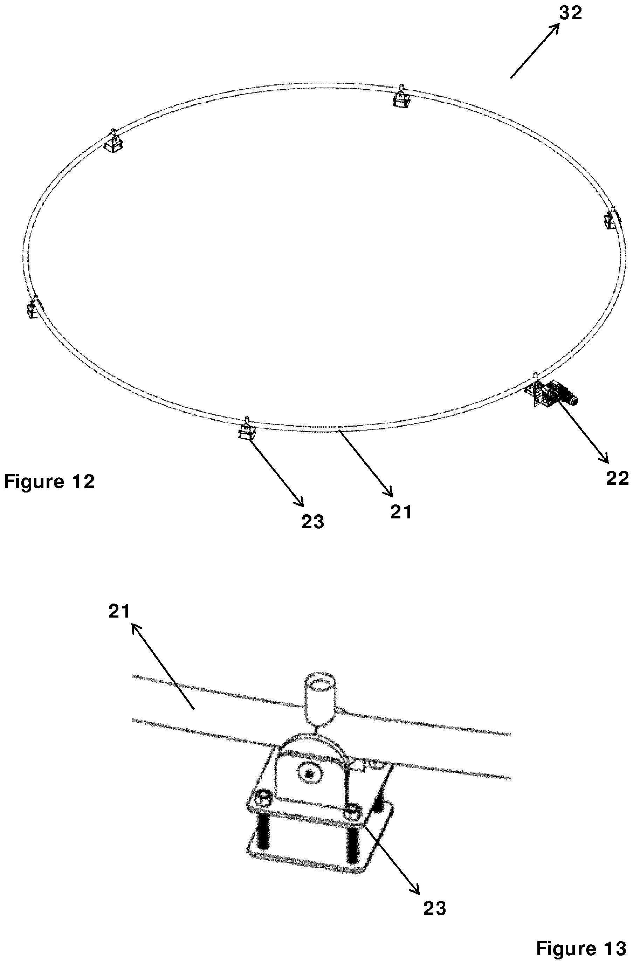

- **Figure 12:**: General view of the platform ring.
- **Figure 13:**: General view of the platform ring supporting legs.

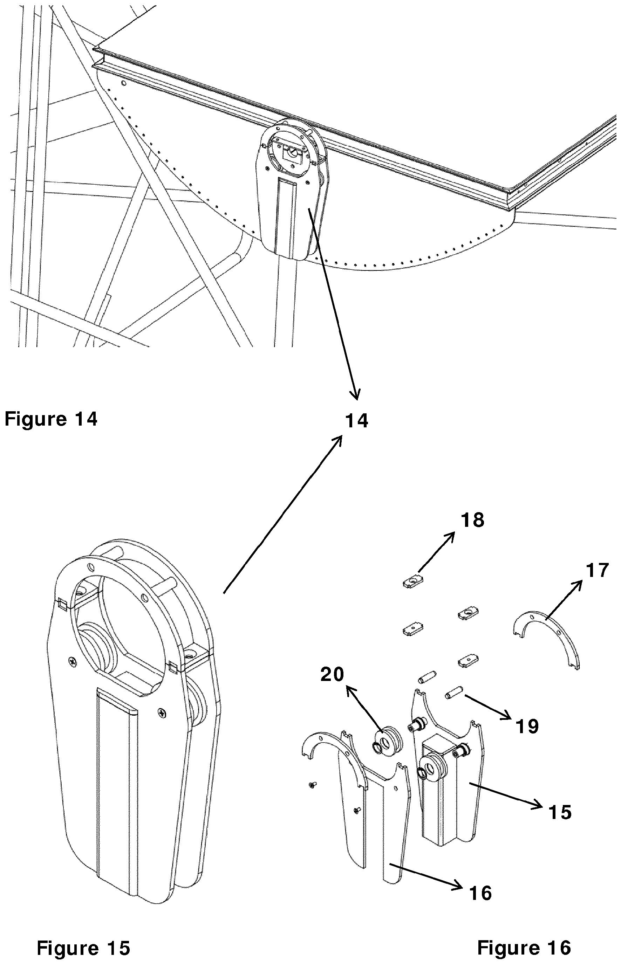

- **Figure 14:**: Assembled view of the collector connection module.
- **Figure 15:**: Perspective view of the collector connection module.
- **Figure 16:**: Exploded view of the collector connection module.

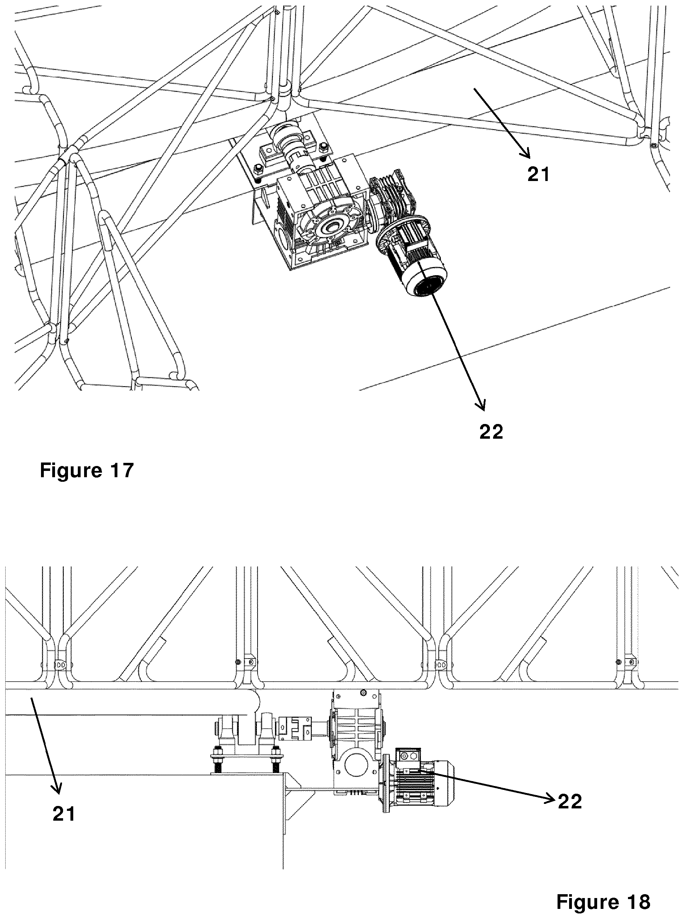

- **Figure 17:**: Assembled view of the platform driving unit.
- **Figure 18:**: Side view of the platform driving unit.

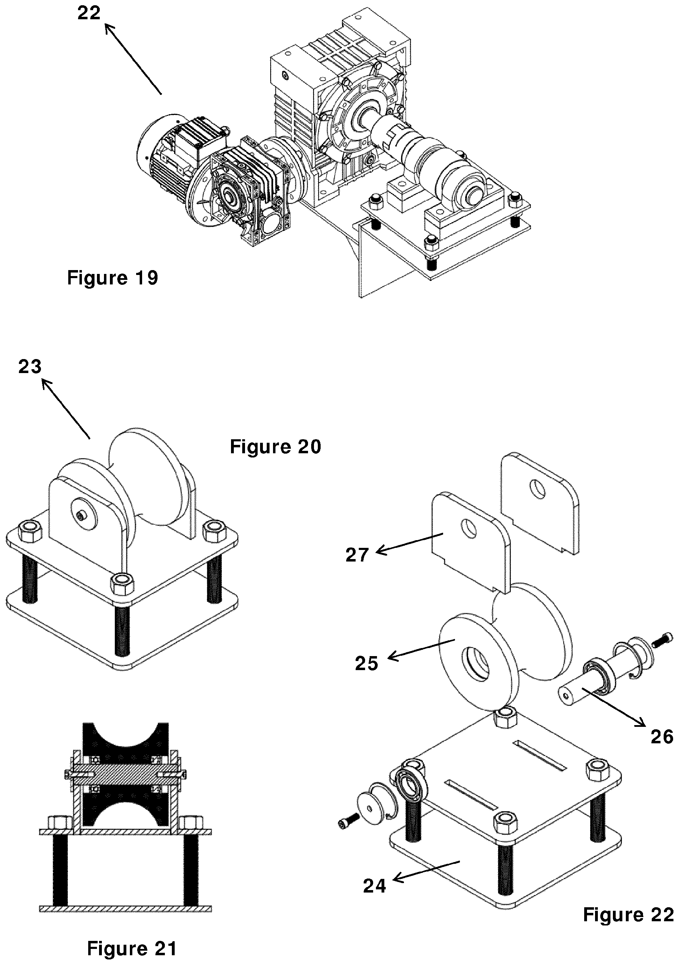

- **Figure 19:**: Perspective view of the platform driving unit.
- **Figure 20:**: Perspective view of the connection coupling of the platform driving unit.
- **Figure 21:**: Side view of the connection coupling of the platform driving unit.
- **Figure 22:**: Exploded view of the connection coupling of the platform driving unit.
- **Figure 23:**: Exploded view of the collector.
- **Figure 24:**: Plan view of the platform in different collector configurations.

### Descriptions of the Components/ Sections/ Parts Forming the Invention

In order to better describe the platform developed by this invention, reference numbers are individually assigned to the parts and components in the figures and description of each of these numbers are provided below.
- 1.: Platform structure
- 2.: Square leg
- 3.: Square leg polygonal part
- 4.: Square leg intermediate connection part
- 5.: Square leg connection pin
- 6.: Polygonal leg
- 7.: Polygonal leg triangular part
- 8.: Polygonal leg intermediate connection part
- 9.: Polygonal leg connection pin
- 10.: Supporting pole
- 11.: Supporting pole short rod
- 12.: Supporting pole long rod
- 13.: Supporting pole connection nut
- 14.: Collector connection module
- 15.: Collector connection module body
- 16.: Collector connection module cover
- 17.: Collector connection module connection arch
- 18.: Collector connection module washer
- 19.: Collector connection module pin
- 20.: Collector connection module roller bearing
- 21.: Platform ring
- 22.: Platform ring driving unit
- 23.: Platform ring rotation leg
- 24.: Platform ring rotation leg body
- 25.: Platform ring rotation leg roller bearing
- 26.: Platform ring rotation leg roller bearing connection rod
- 27.: Platform ring rotation leg roller bearing connection plate
- 28.: Solar collector
- 29.: Solar collector side cover plate
- 30.: Solar collector top cover glass
- 31.: Platform assembly
- 32.: Platform motion mechanism

### Detailed Description of the I nvention

It is a modular carrier platform developed for installation and positioning of parabolic solar collectors used in solar thermal systems and it consists of 2 main components that enables tracking the sun perpendicularly all day long.
A. **PLATFORM STRUCTURE (1):**
   The platform structure (1) functions as a carrier structure on which the parabolic solar collectors are located and it mainly consists of 4 components.
      - **Square Leg (2):** The square leg (2) part is the structural component that provides connection between two or more polygonal legs (6) and it is formed by assembling at least two square leg polygonal parts (3) and at least two square leg intermediate connection parts (4) by more than one square leg connection pin (5). It is required to use at least two square legs (2) to form the platform structure (1).
      - **Polygonal Leg (6):** Polygonal leg (6) part is the main carrying component that forms the periphery of the platform structure (1) and it is formed by assembling at least two polygonal leg triangular parts (7) and at least two polygonal leg intermediate connection parts (8) by more than one polygonal leg connection pin (9). It is required to use at least four polygonal legs (6) to form the platform structure (1).
      - **Supporting Pole (10):** Supporting pole (10) is the component that provides connection of at least two polygonal legs (6) with each other and it consists of at least one supporting pole short rod (11) and at least one supporting pole long rod (12) that is assembled by more than one supporting pole connection nut (13). It is required to use at least two supporting pole (10) to form the platform structure (1).
      - **Collector Connection Module (14):**It is the component that is connected to the supporting poles (10), that enables assembly of parabolic solar collector (28) to the platform structure (1) via its short edge and that enables the collector (28) to perform a rotational motion about its long edge; and it comprises at least four collector connection module washers (18) located inside the collector connection module body (15), at least two collector connection module pins (19), at least two collector connection module roller bearings (20) and one collector connection module cover (16) that enables forming the module (14) by joining with the body (15) and at least two collector connection module arches (17). It is required to use at least two collector connection modules (14) to form the platform structure (1).
**B. PLATFORM MOTION MECHANISM (32):**
   It is the mechanism on which at least one platform structure (1) is positioned and that enables the structure (1) to rotate 360° about its own axis, it mainly consists of 3 components.
      - **Platform Ring (21):** The platform ring (21) positioned below the platform structure (1) and on the platform ring rotation legs (23) is in a circular form and it enables the platform structure (1) to rotate about its own axis on the rotation legs (23).
      - **Platform Ring Driving Units (22):** It is the unit that drives the ring (21) to enable rotation of the platform ring (21) and thus the platform structure (21) on the rotation legs (23) and it is an electric motor in the basic application of the invention. Besides, it may be an internal combustion motor depending on the dimension of the platform assembly (31). It is also possible to use one or more driving units (22) depending of the dimension of the platform assembly (31).
      - **Platform Ring Rotation Leg (23):** The number of rotation legs (23) on which the platform ring (21) is positioned may be two or more depending on the size of the platform assembly (31) and they support the ring (21) from different points. Besides, the rotation leg (23) consists of a body (24) and a roller bearing (25) mounted to the rod (26) installed between two plates (27) assembled to the body (24).
**C. SOLAR COLLECTOR SI DE COVER PLATE (29):** Since the solar collector (28) can track the sun perpendicularly all day long by means of the platform of the invention, it is possible for the collector (28) to have a completely closed design. The side cover plates (29) required to be used for production of the collector (28) in closed state does not overshadow the collector surface since the sun is constantly tracked perpendicularly. Besides, the two side cover plates (29) per collector (28) used on the short edges of the collectors (28) is the components on which the collector connection module (14) is mounted.
**D. SOLAR COLLECTOR TOP COVER GLASS (30):** Since the solar collector (28) can track the sun perpendicularly all day long by means of the platform of the invention, it is possible for the collector (28) to have a completely closed design. To produce the collector (28) in closed state, in addition to side cover plates (29), one top cover glass (30) is used per collector (28). Thus, the collector (28) is isolated from all atmospheric conditions.

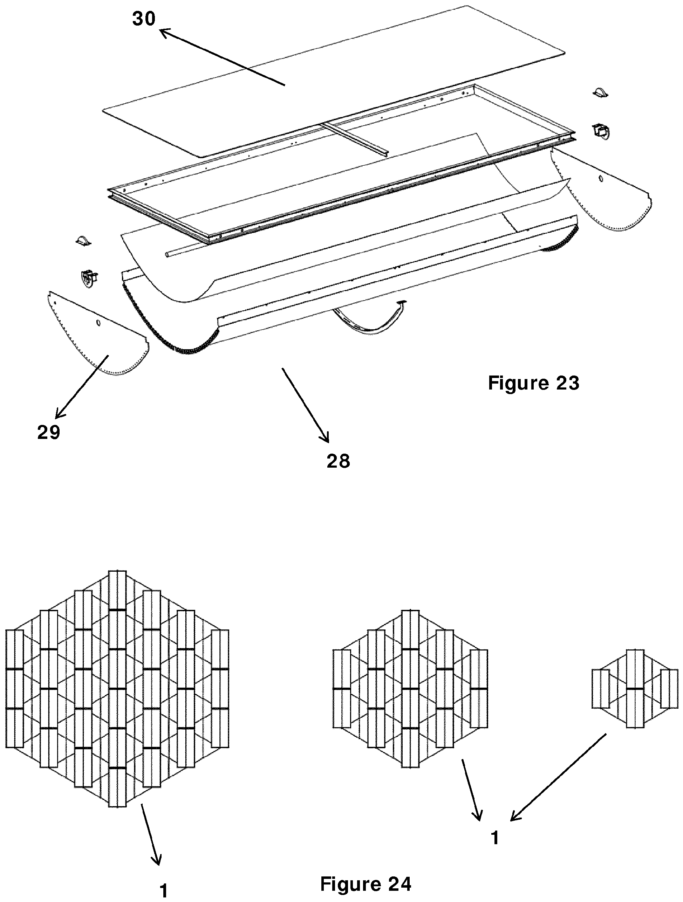

The platform of the invention has a modular structure and it is used as a platform assembly (31) that comprises the above-described components in its basic form. Besides, the platform of the invention may be configured to accommodate a single solar collector (28), but also it is possible to use it in different configurations that can accommodate more than one solar collector (28) as can be seen in Figure 24 due to its modular structure. The dimensions of the platform ring (21) is increased as the structure grows bigger and the number of rotation legs (23) and driving units increase depending on the weight increasing with the enlarging dimensions.

In the basic implementation of the invention, the solar collector (28) is mounted to the platform structure (1) through the collector connection modules (14) connected to the side cover plates (29) and the platform structure (1) seats on the rotation legs (23). By means of at least one driving unit (22) connected to at least one of the rotation legs (23), the platform is enabled to rotate about its own axis.

## Claims

1. The invention subject matter of the application is a modular carrier platform developed for installation and positioning of the parabolic solar collectors (28) used in solar thermal systems, that comprises;
- at least one platform structure (1) which consists of;
• at least two square legs (2) which are formed by assembling at least two square polygonal parts (3) and at least two square intermediate connection parts (4) via more than one square leg connection pins (5) and which are the structural components that provide the connection between two or more polygonal legs (6),
• at least four polygonal legs (6) which are formed by assembling at least two polygonal leg triangular parts (7) and at least two polygonal leg intermediate connection parts (8) via more than one polygonal leg connection pins (9) and which are the main supporting components that form the periphery of the platform structure (1),
• at least two supporting posts (10) which are formed by at least one supporting post short rod (11) and at least one supporting post long rod (12) assembled via more than one supporting post connection nuts (13) and which are the components that enable connection of at least two polygonal legs (6) with each other,
• at least two collector modules (14) which comprise at least four collector connection module washers (18), at least two collector connection module pins (19), at least two collector connection module roller bearings (20) located inside the collector connection module body (15) and one collector connection module cover (16) that forms the module (14) by joining with the body (15) and at least two collector connection module arches (17), which are connected to supporting posts (10) and which are the components that enable assembly of the parabolic solar collector (28) to the platform structure (1) along its short edge and that enable rotation of the collector (28) about the axis of its long edge,
- a platform motion mechanism (32) which consists of;
• a platform ring (21) which is positioned below the platform structure (1), which is located on the platform ring rotation legs (23) and which enables rotation of the platform structure (1) about its own axis on the rotation legs (23),
• at least one platform driving unit (22) which drives the ring (21) to enable rotation of the platform ring (21) and thus the platform structure (21) on it on the rotation legs (23),
• at least two rotation legs (23) which comprise a body (24), two plates (27) assembled to the body (24), a rod (26) installed between the plates (27) and a roller bearing (25) mounted on said rod (26) and on which the platform ring (21) is positioned,
- at least two solar collector side cover plates (29) which are used two pieces per collector (28) on the short edges of the collectors (28) to produce the collectors (28) in closed state and on which the collector connection modules (14) is assembled,
- one top cover glass (30) per collector (28) to produce the collectors (28) in closed state and to isolate them from atmospheric conditions.

2. A platform according to Claim 1 **characterized in that** the platform driving unit (22) is an electric motor.

3. A platform according to Claim 1 **characterized in that** one or more driving units (22) are used depending on the size of the platform assembly (31).

4. A platform according to Claim 1 **characterized in that** two or more platform ring rotation legs (23) are used depending on the size of the platform assembly (31).
